# EUROPÄISCHE PATENTSCHRIFT

(11) **EP 1 779 637 B1**
(45) Veröffentlichungstag und Bekanntmachung des Hinweises auf die Patenterteilung: **09.03.2011**
(21) Anmeldenummer: 05787057.8
(22) Anmeldetag: 11.08.2005
(51) Int. Cl.: H04L 29/12, H04L 12/28

(54) **VERFAHREN ZUR VERMITTLUNG VON IP-PAKETEN ZWISCHEN KUNDENNETZEN UND IP-PROVIDER-NETZEN ÜBER EIN ZUGANGSNETZ**
METHOD FOR SWITCHING IP PACKETS BETWEEN CLIENT NETWORKS AND IP PROVIDER NETWORKS BY MEANS OF AN ACCESS NETWORK
PROCEDE DE TRANSMISSION DE PAQUETS INTERNET ENTRE DES RESEAUX DE CLIENTS ET DES RESEAUX DE PRESTATAIRES DE SERVICES INTERNET, PAR L'INTERMEDIAIRE D'UN RESEAU D'ACCES

(30) Priorität: 19.08.2004 EP 04019739
(43) Veröffentlichungstag der Anmeldung: 02.05.2007
(73) Patentinhaber: Nokia Siemens Networks GmbH & Co. KG, 81541 München (DE)
(72) Erfinder: STADEMANN, Rainer, 82335 Berg (DE); THEIMER, Thomas, 82065 Baierbrunn (DE)
(86) Internationale Anmeldenummer: PCT/EP2005/053964
(87) Internationale Veröffentlichungsnummer: WO 2006/018420

(56) Entgegenhaltungen:
- WO-A1-03/067821
- US-A1- 2003 037 163
- US-B1- 6 771 673

## Beschreibung

### Aufgabenstellung der Erfindung

Zukünftige Zugangsnetze für den breitbandigen Teilnehmeranschluss müssen höhere Bandbreiten bei niedrigeren Kosten zur Verfügung stellen, als dies mit den heute üblichen ATMbasierten Anschlussnetzen möglich ist. Aus diesem Grund sollen zukünftige Netze verstärkt auf der IP- und Ethernet-Technologie basieren, die sich derzeit als attraktive Lösung für Metro-Netze im Markt etabliert.

Während die Netzarchitektur für ATM-basierte Zugangsnetze im DSL Forum bereits definiert wurde, sind die Arbeiten zu IP- und Ethernet-basierten Zugangsnetzen noch im Anfangsstadium. Benötigt wird eine neue Netzarchitektur für die IP- und Ethernet-basierte Aggregation von breitbandigen Teilnehmeranschlüssen, welche die folgenden Anforderungen im optimaler Weise erfüllt:
- Dynamischer Netz-Zugang mit Authentifizierung und Zugangskontrolle
- Minimaler Administrationsaufwand für das Einrichten neuer Teilnehmer
- Gute Skalierbarkeit
- Verkehrstrennung zwischen einzelnen Teilnehmeranschlüssen
- Dynamische Auswahl verschiedener Dienste bzw. Dienstklassen
- Dynamische Auswahl verschiedener Dienstanbieter
- Aggregation vieler Teilnehmer in wenige, dienstspezifische logische Tunnel
- Unterstützung von - Quality of Service
- Hohe Resistenz gegen diverse Angriffe auf die Netzfunktion und -integrität

Gegenstand dieser Erfindung ist eine neuartige Aggregations-lösung gemäss den Ansprüchen 4 und 22 für den Einsatz insbesondere in Ethernet-orientierten Breitband-Zugangsnetzen. Die Erfindung soll simultane IP Sessions eines Endkunden über ein Ethernet-Zugangsnetz zu mehreren verschiedenen IP Netzen unabhängiger IP Dienstanbieter ermöglichen, ohne hierzu PPPoE zu benötigen. Unabhängige IP Netzbetreiber müssen ihre IP Adressräume nicht untereinander koordinieren, die Adressräume verschiedener IP Netzbetreiber können sich auch überlappen oder identisch sein. Mit der Erfindung soll es ermöglicht werden, dass kostengünstige Netze mit IP über Ethernet und einem DHCP basiertem Session Control aufgebaut werden können, während gleichzeitig mehrere unabhängige IP Netzbetreiber durch ein Zugangsnetz unterstützt werden können.

### Beispiel für die Aufgabenstellung gemäß der Erfindung

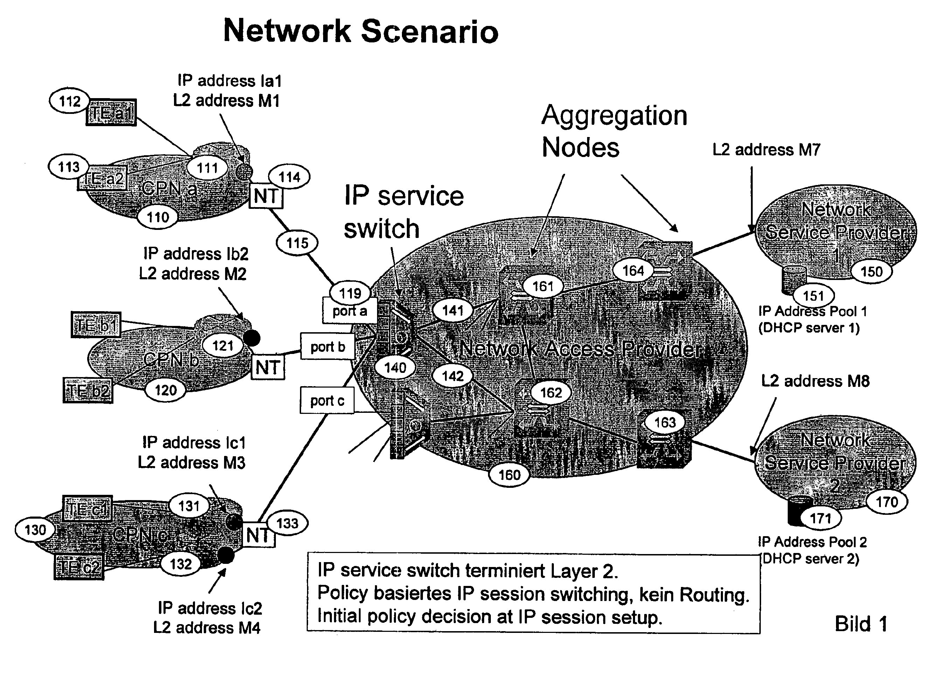

Ein Beispiel für ein Netzszenario, in dem sich diese Erfindung mit hohem Vorteil einsetzen lässt, ist in Bild 1 gezeigt. Dieses Szenario enthält drei Kundennetze 110, 120, 130. Beispielhaft sei zunächst das Kundennetz 110 betrachtet. Das Kundennetz 110 enthält zwei Endgeräte (zum Beispiel PCs) 112 und 113. Diese sind an einem Kunden-IP-Router 111 angeschlossen. Der Router 111 ist mit einem Netzabschluß (NT) 114 verbunden. Der Netzabschluss 114 ist über eine Zugangsleitung 115 mit dem "Port a", 119, des Zugangsknotens 140 verbunden. Der Zugangsknoten ist über zwei Uplinks 141 und 142 mit zwei Aggregationsknoten 161 und 162 verbunden. Über weitere optionale Aggregationsknoten 163 und 164 sind schließlich zwei IP Netze 150 und 170 zweier IP Netzbetreiber erreichbar. Zugangsknoten und Aggregationsknoten gehören zum Zugangsnetz 160 eines Zugangsnetzbetreibers.

Im Beispiel besteht nun die Aufgabe, für die Dauer einer IP Session IP Pakete zwischen Kundenrouter 111 und dem IP Netzbetreiber 150 über das Zugangsnetz zu transportieren, wozu der Netzbetreiber dem Kundenrouter zunächst eine IP Adresse (im Beispiel Ia1) zuweisen muss. Hierzu muss der Netzbetreiber 150 bekannte Protokolle, wie zum Beispiel DHCP, und weitere Hilfsmittel, wie zum Beispiel einen DHCP Server 151, einsetzen.

Entsprechend muss im Beispiel der Netzbetreiber 170 dem Kundenrouter 121 im Kundennetz 120 ebenfalls für die Dauer einer IP Session eine IP Adresse Ib2 zuweisen können und IP Pakete müssen über das Zugangsnetz 160 zwischen dem Kundenrouter 121 und dem Netzbetreiber 170 transportiert werden. Die IP Adressen Ia1 und Ib2 müssen dabei völlig unabhängig voneinander vergeben werden können.

Auch muss es möglich sein, dass einem Kundennetz mehrere IP Adressen von verschiedenen IP-Netzbetreibern gleichzeitig zugewiesen werden können. Ein Beispiel ist für das Kundennetz 130 gezeigt. Dieses enthält zwei Kundenrouter 131 und 132, die beide zum Beispiel über ein Ethernetnetz an den gleichen Netzabschluss 133 angeschlossen sind. Hier muss der IP Netzbetreiber 150 dem Router 131 eine IP Adresse Ic1 zuweisen können, während gleichzeitig der IP Netzbetreiber 170 dem zweiten Router 132 im selben Kundennetz eine IP Adresse Ic2 zuweisen können muss. IP Pakete müssen simultan über das Zugangsnetz 160 einerseits zwischen Router 131 und IP Netzbetreiber 150 und andererseits zwischen Router 132 und IP Netzbetreiber 170 transportiert werden können.

### Lösung der Aufgabenstellung gemäß der Erfindung

Die erfindungsgemäße Lösung besteht in einem Verfahren zur Vermittlung der Datenpakete anhand der einer IP Session zugeordneten Daten. Konkret bedeutet dies:
- Für Pakete in Richtung vom Kundennetz zu einem IP Netzbetreiber: empfangene Pakete werden anhand ihrer Ursprungs-Schicht-2-Adresse sowie Ursprungs-IP-Adresse einer IP Session zugeordnet (im Beispiel: M1 und Ia1). Alle Pakete einer IP Session werden an die der Session zugeordneten Schicht-2-Adresse des IP Netzbetreibers weitergeleitet (im Beispiel: M7).
- Für Pakete in Richtung von einem IP Netzbetreiber zum Kundennetz: empfangene Pakete werden anhand ihrer Ursprungs-Schicht-2-Adresse sowie Ziel-IP-Adresse einer IP Session zugeordnet (im Beispiel: M7, Ia1). Alle Pakete einer IP Session werden an die der Session zugeordneten Schicht-2-Adresse des Kundennetzes weitergeleitet (im Beispiel: M1).

### Zusatz-Aufgabenstellung gemäß der Erfindung

Neben der genannten Aufgabe der Erfindung ergibt sich in vielen Netzen eine weitere, damit zusammenhängende Aufgabenstellung, die im folgenden auch als Zusatz-Aufgabenstellung bezeichnet wird.

Für Geschäftskunden bieten Netzbetreiber oft durchgängige Netzdienste auf Schicht 2 an. Beispiele sind ATM Dienste (e.g. Permanent Virtual Circuit (PVC) Dienste), TDM Leased Line Services (e.g. E1/T1 Dienste) und neuerdings Metro Ethernet Dienste, wie z.B. vom Metro Ethernet Forum (MEF) spezifiziert. Bei diesen Diensten werden Schicht 2 Frames bzw. Zellen der jeweiligen Protokolle zwischen den Übergabepunkten des Geschäftskunden im Regelfall unverändert durch das Netz des Betreibers transportiert.

Für Privatkunden sind diese Schicht 2 basierten Dienste oft nicht notwendig, da es sich bei Privatkunden meist um Internet Zugangsdienste bzw. Zugangsdienste zu Applikation basierend auf dem IP Protokoll wie z.B. VoIP oder Video-Applikationen handelt. Diese Applikationen erfordern den Transport von IP-Paketen des Privatkunden zu einem oder mehren IP-Netzbetreibern, gegebenenfalls auch den simultanen Zugang zu mehreren IP-Netzbetreibern. Für diese Dienste ist der Transport von IP-Paketen zwischen dem Kundennetz und dem jeweiligen IP Netzbetreiber ausreichend. Zwar ist hierfür ein Schicht 2 basierter Dienst hinreichend, jedoch nicht notwendig. Da insbesondere mit Ethernet als Schicht 2 sowohl Skalierungsprobleme (e.g. z.B. nur 4096 VLAN tags) als auch diverse Sicherheitsrisiken verbunden sind (z.B. MAC Address Spoofing, MAC Address Flooding), ist es insbesondere für Privatkunden vorteilhaft, die Schicht 2 im Zugangsknoten zu terminieren und die IP Pakete selbst zum IP Netzbetreiber zu transportieren. Somit sind Lösungen besonders vorteilhaft, die *nicht* die vollständigen Ethernet Frames aus dem Kundennetz zum IP Netzbetreiber transportieren, sondern nur deren Schicht 3 Inhalt, nämlich das IP Paket.

### Bisher bekannte Lösungen für die genannte Zusatz-Aufgabenstellung

a) Die Architektur für ATM-basierte Breitband-Zugangsnetze mit QoS Unterstützung ist beispielsweise in den DSL-Forum Spezifikationen TR-058 und TR-059 beschrieben. Diese Netze basieren auf fest eingerichteten ATM Virtuellen Verbindungen (PVC) zwischen dem Teilnehmer-Anschluss und einem zentralen IP Netz-Zugangsknoten (Breitband Zugang Server, BAS). Der BAS (Broadband Access Server) übernimmt die Zugangskontrolle und Authentifizierung der Teilnehmer sowie Diensteauswahl.
   Diese Architektur hat verschiedene Nachteile:
   - Die Verbindungen (PVC) zwischen Teilnehmer und BAS müssen sowohl im ATM Netz wie auch im BAS konfiguriert werden.
   - Pro QoS Klasse wird jeweils ein eigener ATM PVC benötigt
   - Der Verkehr zwischen Teilnehmern muss immer über den BAS laufen
   - Heutige BAS Produkte erlauben keine kostengünstigen Dienste mit hohen Datenraten (beispielsweise mehrere Videokanäle pro Teilnehmer)
b) Ein Verfahren, welches für Ethernet Zugangsnetze das Sicherheitsproblem teilweise entschärft, ist im IETF Draft draft-melsen-mac-forced-fwd-02.txt mit Titel "MAC Forced Forwarding: An ARP proxy method for ensuring traffic separation between hosts sharing an Ethernet Access Network" von T.Melsen and S.Blake offen gelegt worden. Bei diesem Verfahren überprüft der Zugangsknoten die teilnehmerseitig verwendete MAC Zieladresse in den Ethernet-Frames auf Zulässigkeit. Ein ARP Proxy im Zugangsknoten gibt zusätzlich bei teilnehmerseitigen ARP Requests nur zulässige MAC Adressen zurück. Dieses Verfahren löst nicht das Problem des simultanen Zugangs zu verschiedenen unabhängigen IP Netzen.
c) Ein anderes Verfahren ist unter dem Namen "(Virtual) MAC Address Translation" bekannt. (siehe z.B. ITU Contribution COM 13 - D 447 - E der ZTE Corporation von Feb. 2004). Bei diesem Ansatz werden die MAC Adressen der teilnehmerseitigen Schicht 2 Endpunkte vom Zugangsknoten eineindeutig in "virtuelle" MAC Adressen, die der Zugangsnetz-Betreiber bestimmte umgesetzt. Die MAC Adressen der netzseitigen Schicht 2 Endpunkte bleiben beim Durchgang der Ethernet Frames durch den Zugangsknoten unverändert. Nachteilig ist bei diesem Lösungsansatz insbesondere, dass für jede teilnehmerseitige MAC Adresse eine zusätzliche virtuelle MAC Adresse im Netz benötigt wird. Auch dieses Verfahren löst nicht das Problem des simultanen Zugangs zu verschiedenen unabhängigen IP Netzen.
d) In einem weiteren Verfahren, das dem Stand der Technik entspricht, terminiert eine IP-Router Funktion im ZugangsKnoten die Schicht 2 und routet die IP Pakete der Schicht 3 anhand der IP Adressen (IP routing). Bei dieser Lösung ergeben sich folgende Nachteile:
   i. Der Zugangsnetzbetreiber muss selbst IP Netzbetreiber werden
   ii. Die IP Adressen können nicht von unabhängigen IP Netzbetreibern vergeben werden.
   iii. Die Zahl der IP-Router erhöht sich um ca. ein bis zwei Größenordnung im Vergleich zu heutigen IP-Netzen, wodurch der Aufwand zum Betreiben des IP Netzes erheblich ansteigt.
   iv. Der IP Router muss aufwendige Routingprotokolle beherrschen.
e) Eine weitere bekannte Lösung verwendet das PPPoE oder PPPoA Protokoll zwischen Kundennetz und IP Netzbetreiber. Hierbei werden PPP Tunnel zum jeweiligen IP Netz aufgebaut, in dem die IP Pakete transportiert werden. Nachteilig sind bei dieser Lösung die hohen Kosten zur Terminierung von PPPoE/PPPoA in einem Broadband Access Server (BAS) sowie Sicherheitsprobleme in Ethernet basierten Zugangsnetzen.

Das Dokument WO/03/067821 A1 beschreibt die Zuordnung von Service Providers zu Kundennetzen innerhalb eines Zugangssystems mit hilfe von dynamischen MAC-Adressen.

### Lösung der Zusatz-Aufgabenstellung gemäß der Erfindung

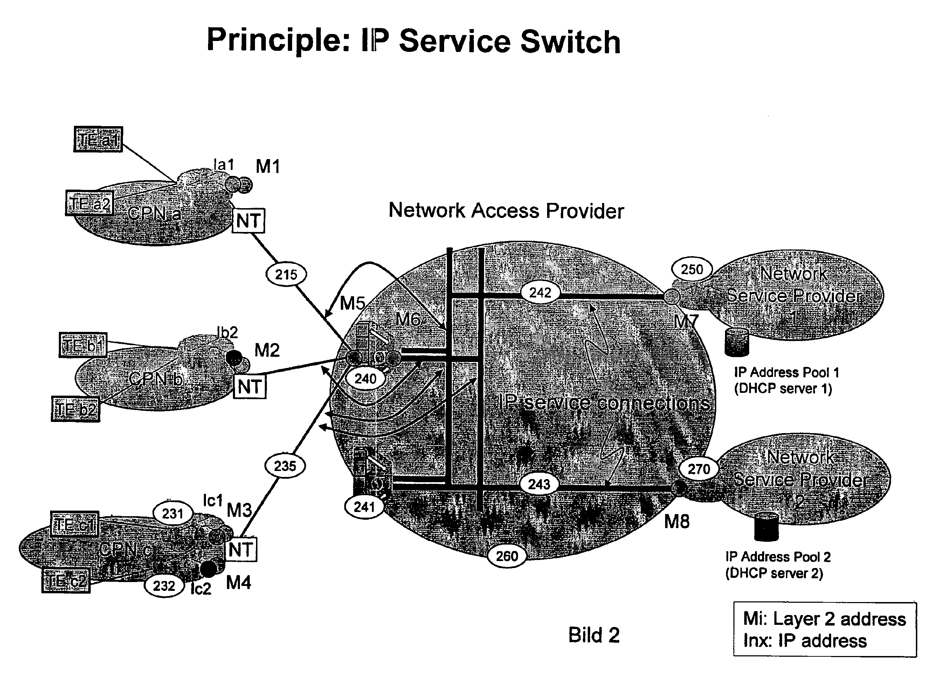

Bild 2 zeigt schematisch die Funktionsweise eines Zugangsknotens, der erfindungsgemäß als IP Service Switch arbeitet. Im Zugangsnetz 260 sind für jeden unterstützten IP-Netzbetreiber eine oder mehrere "IP-Dienst-Verbindungen" zwischen einen oder mehren Zugangsknoten und einem oder mehren IP Edge Routern der IP Netzbetreiber realisiert. Im Beispiel von Bild 2 ist eine IP-Dienst-Verbindung 242 zwischen den Zugangsknoten 240 und 241 und dem Edge Router 250 für Netzbetreiber 1 eingerichtet. Entsprechend ist eine weitere IP-Dienst-Verbindung 243 zwischen den gleichen Zugangsknoten 240 und 241 und dem IP Edge Node 270 eingerichtet.

IP-Dienst-Verbindungen sind im einfachsten Fall nur durch eine Schicht 2 Ziel-Adresse der Schnittstelle im Zugangsnetz zu einem IP Edge Router des jeweiligen IP Netzbetreibers gegeben. Dieses sind im Beispiel von Bild 2 die Schicht 2 Adressen M7 und M8. In Ethernet Netzen sind M7 und M8 die MAC Adressen der Ethernet Schnittstelle in den Edge Routern 250 und 251. Kennzeichnend für eine IP-Dienst-Verbindung im Sinne dieser Erfindung ist der Transport von IP Paketen zwischen einem oder mehreren IP Service Switchen einerseits und einem oder mehreren Edge Routern andererseits, die durch Schicht 2 Adressen vom erfindungsgemäßen Netzelement (IP Service Switch) erreicht werden können (der IP Service Switch selbst benötigt dafür keine eigene IP Addresse). Da die IP Dienst-verbindungen somit auf Schicht 2 definiert sind, können die IP Adressen der transportierten IP Pakete zwischen verschiedenen IP Dienst-Verbindungen unabhängig voneinander gewählt werden.

Aus Sicherheitsgründen und um spezifische Dienstgüten im Zugangsnetz einfacher garantieren zu können, ist es oft vorteilhaft zusätzliche Schicht 2 Attribute einzusetzen, um IP Dienstverbindungen zu realisieren. In Ethernet Netzen kann hierzu zum Beispiel vorteilhaft die VLAN-Technik nach IEEE Standard 802.1q verwendet werden. Dazu setzt der IP Service Switch 240 im Beispiel der Bilder 2 , 3, 4 neben der Ziel MAC Adresse M7 bzw. M8 das VLAN tag 2011 bzw. 2022 der IP Dienstverbindung auf. Dies ist vorteilhaft da hiermit Ressourcen des Zugangsnetzes einer IP Dienstverbindung in den nachfolgenden L2 Switchen des Zugangsnetzbetreibers nur anhand des VLAN Tags zugewiesen werden können. Dies ist eine weit verbreitete Funktion in vielen Schicht 2 Switchen. Auch sind Realisierungen von IP Dienstverbindungen durch MPLS (Label Switched Path) oder IP Technik (zum Beispiel L2TP, RFC 2661) denkbar.

Zusätzlich ist in Bild 2 gezeigt, wie der Zugangsknoten IP Pakete zwischen IP Sessions der kundenseitigen Ports einerseits und den IP-Dienst-Verbindungen andererseits vermittelt. Beispielsweise werden ankommende IP-Pakete von der IP Session auf Zugangsleitung 215 (entsprechend Port a in Bild 1) auf die IP-Dienst-Verbindung 242 vermittelt und umgekehrt ankommende IP Pakete auf der IP-Dienst-Verbindung 242 mit IP Adresse Ia1 auf die IP Session der Zugangsleitung 215 vermittelt.

Im Beispiel der Zugangsleitung 235 ist angenommen, dass IP Pakete der beiden verschiedenen IP Session zwischen den Kundenroutern 231 und 232 einerseits und dem Zugangsknoten 240 andererseits z.B. über ein jeweils unterschiedliches Ethernet VLAN (beispielsweise "1001" und "1002") nach IEEE Standard 802.1q oder z.B. über unterschiedliche ATM PVC transportiert werden. Ankommende IP Pakete in Schicht 2 Frames von Zugangsleitung 235 mit Ursprungs-Schicht 2 Adresse M3 und aus VLAN "1001" gehören zu einer IP Session und werden auf IP-Dienst-Verbindung 242 und ankommende IP Pakete von Zugangsleitung 235 mit Ursprungs-Schicht 2 Adresse M4 und aus VLAN "1002" werden auf IP-Dienst-Verbindung 243 vermittelt. Umgekehrt werden vom Zugangsknoten ankommende IP Pakete auf IP-Dienst-Verbindung 242 mit IP Adresse Ic1 in Schicht 2 Frames mit VLAN "1001" und Ziel Schicht 2 Adresse M3 verpackt und auf die Zugangsleitung 235 vermittelt. Ankommende IP Pakete auf IP Dienstverbindung 243 mit IP Adresse Ic2 werden in Schicht 2 Frames mit VLAN "1002" und Ziel Schicht 2 Adresse M4 der Zugangsleitung 235 vermittelt.

Kennzeichnend für eine IP Session im Sinne dieser Erfindung sind
a) mindestens eine Schicht 2 Adresse, mit der ein Gerät in einem Kundennetz erreicht werden kann, und
b) mindestens eine dieser genannten Schicht 2 Adresse zugeordnete IP Adresse.

In den meisten Fällen ist es vorteilhaft, zur Kennzeichnung einer IP Session zusätzlich ein oder mehrere physikalische Ports des erfindungsgemäßen Netzelementes über die das genannte Gerät im genannten Kundennetz erreicht werden kann, hinzuzunehmen. Beispielsweise können somit verschiedene Geräten dieselbe Schicht 2 Adressen verwenden, wenn diese über verschiedene physikalische Ports erreichbar sind.

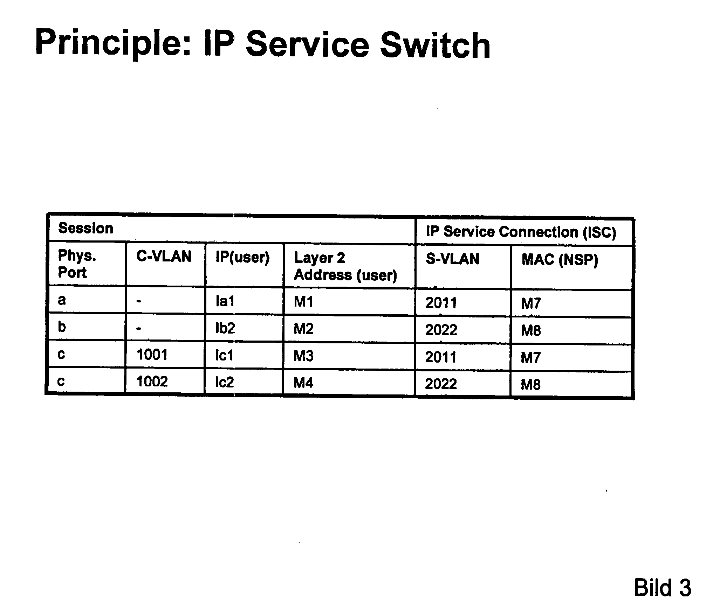

Die Vorschriften zur Session-basierten IP Vermittlung können vom Zugangsknoten in Tabellenform gehalten werden. Ein Beispiel ist in Bild 3 gezeigt. In dieser Tabelle werden endkundenseitige IP Sessions netzseitigen IP-Dienstverbindungen zugeordnet.

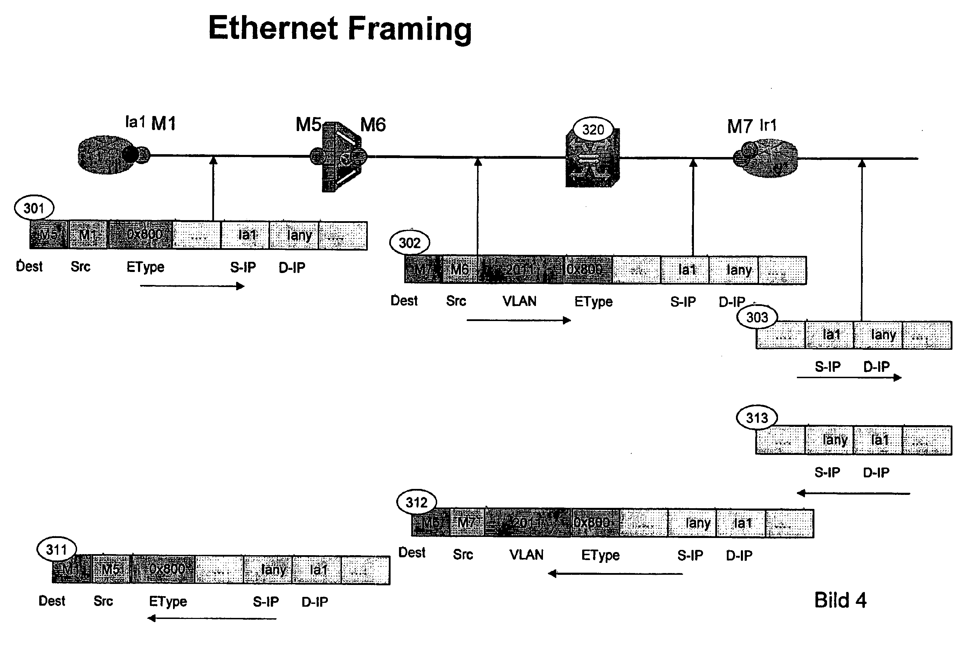

IP Sessions sind im Beispiel durch einen kundenseitigen physikalischen Port am IP Service Switch (im Beispiel a,b, oder c) und durch eine kundenseitige Schicht 2 Adresse und die zugeordnete IP Adresse definiert. Zusätzlich können weiter Attribute eine IP Session definieren. Dazu gehören zum Beispiel , ein kundenseitiges VLAN tag (in Bild 4 unter der Tabellenspalte "C-VLAN").

IP-Dienstverbindungen sind im Beispiel durch eine netzseitige Schicht 2 Adresse eines Endpunktes der IP Dienstverbindung definiert. Im Beispiel von Bild 3 sind es die Adressen M7 und M8 der Endpunkte auf den IP Edge Routern 151 und 171 der beiden IP Netzbetreiber 150 und 170. Optional können weitere Attribute eine Dienstverbindung charakterisieren. Im Beispiel der Vermittlungsvorschrift von Bild 3 sind jeweils ein VLAN tag (in Bild 4 unter der Tabellenspalte "S-VLAN") nach IEEE 802.1q einer Dienstverbindung zugeordnet.

Mit Hilfe der durch die Tabelle in Bild 3 vorgegebenen Vermittlungsvorschriften können die notwendigen Adress- und Attributumsetzungen durch den IP Service Switch erfolgen. Neben dieser Umsetzungen können zusätzliche Überprüfungen des Verkehrs stattfinden, um zum Beispiel die Netzsicherheit und - integrität zu gewährleisten. Beispielsweise können IP-Pakete eines Endkunden verworfen werden, wenn diese nicht die in einer Vermittlungsvorschrift vorgegebene Quell-IP Adresse tragen. Die Vermittlungsvorschriften können entweder ganz oder teilweise administrativ vorgegeben werden oder sie werden beim Aufbau einer IP-Session durch Bearbeitung von Protokollen zur Authentisierung, Autorisierung und IP-Adressvergabe wie 802.1x, DHCP, RADIUS im Zugangsknoten-automatisch erlernt.

Bild 4 zeigt für den Fall von Ethernet als Schicht 2 Protokoll, in einer vorteilhafte Ausprägung der Erfindung wie die Vermittlungsvorschriften aus Bild 3 von einem Netzelement genutzt werden, um die Schicht 2 Adressen und Attribute der Ethernet Frames bei der Vermittlung der Pakete zwischen IP Session und IP Dienstverbindung umzusetzen.

Im Gegensatz zum bekannten Lösungsansatz 1d) können in dieser vorteilhaften Ausprägung des erfindungsgemäßen Verfahrens verschiedene teilnehmerseitige MAC Adressen M1 bis M4 auf die gleiche Netzadresse M6 abgebildet werden. Im Beispiel von Bild 4 wird die Quell-Adresse M1 im Frame 301 im IP Service Switch durch die MAC Adresse M6 im Frame 302 ersetzt. Gleichzeitig wird die Zieladresse M5 im IP-Service Switch durch die Zieladresse M7 des Edge Routers 250 ersetzt. Umgekehrt wird im Beispiel von Bild 3 in Rückwärtsrichtung (Frames 311,312,313) die Quelladresse M7 im Frame 312 durch die Quelladresse M5 des IP-Service Switch ersetzt, bevor das Frame zum Kundenrouter 111 gesendet wird. Entsprechend wird die Zieladresse M6 in Frame 312 durch die Adresse M1 des Kundenrouters 111 ersetzt.

Hierdurch erhöht sich die Skalierbarkeit, da das Zugangsnetz nicht die teilnehmerseitigen MAC Adressen M1 bis M4 erlernen muss. Zugleich werden Angriffe wie "MAC Address Flooding" auf das Zugangsnetz abgewehrt. In umgekehrter Richtung werden die netzseitigen MAC Adressen M7 und M8 der Edge Router 250 und 270 nicht zu den Teilnehmern weitergeleitet sondern durch eine MAC Adresse M5 des IP Service Switches ersetzt. Auch hierdurch erhöht sich die Netzsicherheit, da hiermit die Adressen der Edge Router den Teilnehmern verborgen bleiben.

Vorteilhaft ist es auch, wenn im IP Service Switch 240 in Richtung Netz als zusätzliches Attribut der IP Dienstverbindung ein VLAN Tag (im Beispiel von Bild 4 das VLAN tag "2011") aufgesetzt wird. Anhand dieses VLAN tags können in einem nachfolgendem Schicht 2 Switch Ressourcen wie z.B. Bandbreite auf einer Verbindungsleitung reserviert werden. In Richtung zum Endkunden wird das VLAN Tag "2011" vom IP Service Switch entfernt. Andere Realisierungen von IP-Dienst-verbindungen z.B. anhand von MPLS Pfaden (LSP, Labeled Switched Path) sind möglich und sind nur Abwandlungen dieser Erfindung.

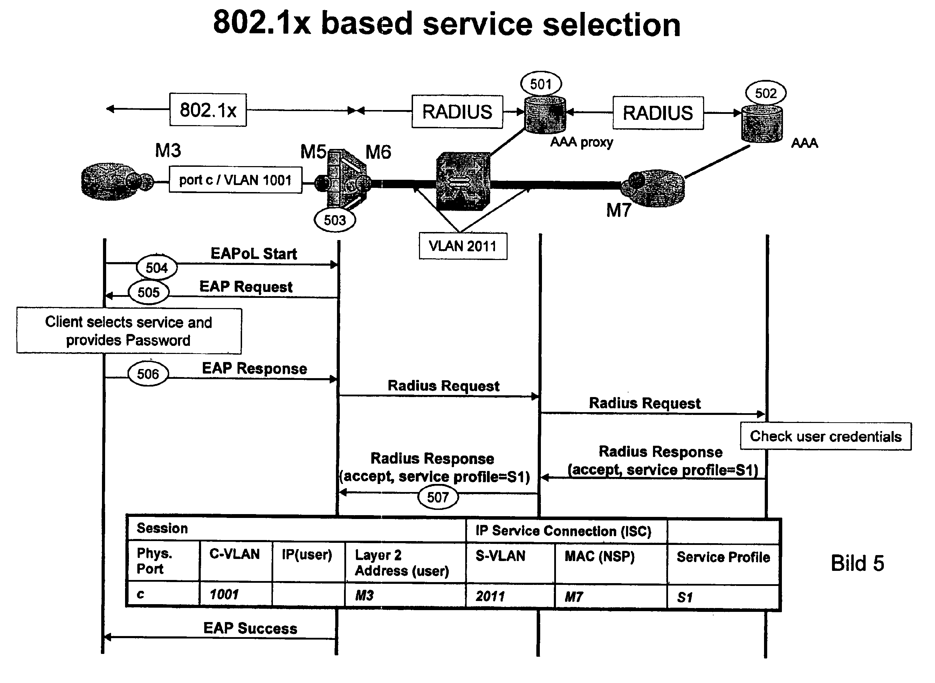

Bild 5 zeigt in einer weiteren vorteilhaften Ausprägung wie IEEE Standard 802.1x genutzt werden kann, um einen ersten Teil der Vermittlungsvorschrift zu bestimmen. Der Nutzer wird zunächst entsprechend dem Stand der Technik mit Hilfe der Protokolle 802.1x und RADIUS, sowie einer AAA (Authentication, Authorization, Accounting) Datenbank authentifiziert und authorisiert. Dabei kann der Nutzer beispielsweise durch Angabe eines Fully Qualified Domain Names (FQDN) den gewünschten Dienst und IP-Netzbetreiber angeben. Anhand des FQDN wird der RADIUS Request durch den Proxy 501 zum AAA-Server 502 des IP-Netzbetreibers weitergegeben. Dieser überprüft die Credentials (z.B. Passwort) und gibt im Erfolgsfall eine RADIUS Nachricht zurück, die Informationen über den angeforderten Dienst enthält (Service Profile). Anhand dieser Informationen kann der IP Service Switch 503 die zugehörige IP Dienstverbindung bestimmen, die im Beispiel durch die Schicht 2 Adresse M7 und das S-VLAN "2011" gegeben ist. Physikalischer Port (c), C-VLAN (1001) und Layer 2 Adresse des Endkundengerätes werden vom IP Service Switch aus den 802.1x Frames 504, 505 und 506 abgeleitet.

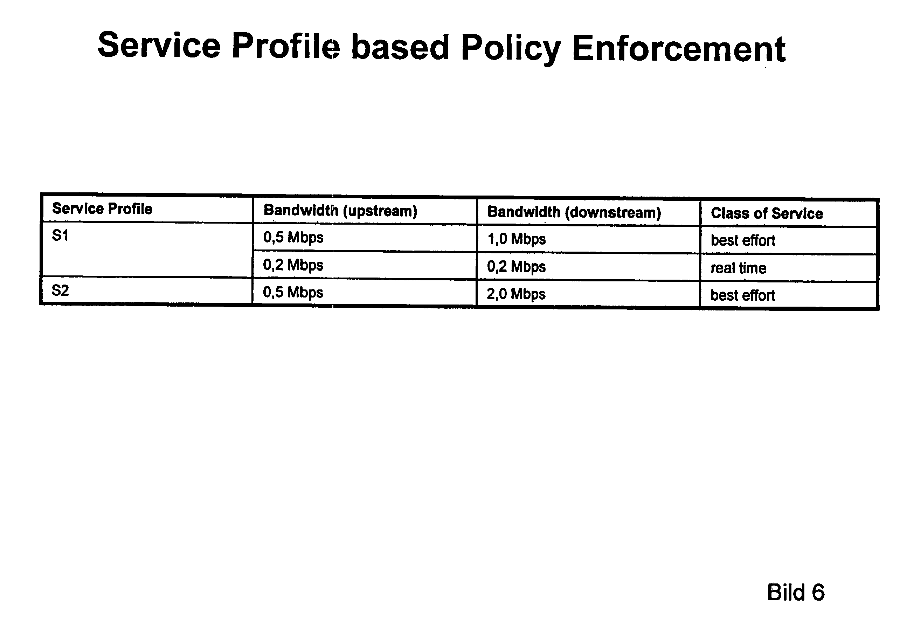

Bild 6 zeigt, wie im IP Service Switch ein Service Profil (im Beispiel von Bild 5 das Service Profil S1 aus der Nachricht 507) verwendet werden kann, um gezielt für die jeweilige IP Session ein Policing des Verkehrs durchzuführen. Dazu hält der IP Service Switch zum Beispiel eine Tabelle wie in Bild 6, in dem verschiedene Service Profile definiert sind. So definiert Profil S1 einen IP Service mit einer "best effort" und einer "real time" Verkehrsklasse, wobei jeweils die angegeben maximalen Bandbreiten vom IP Service Switch für eine IP Session mit Profil S1 freigegeben werden. Entsprechend definiert S2 ein Profil mit nur einer "best effort" Verkehrsklasse mit den angegeben maximalen Bandbreiten.

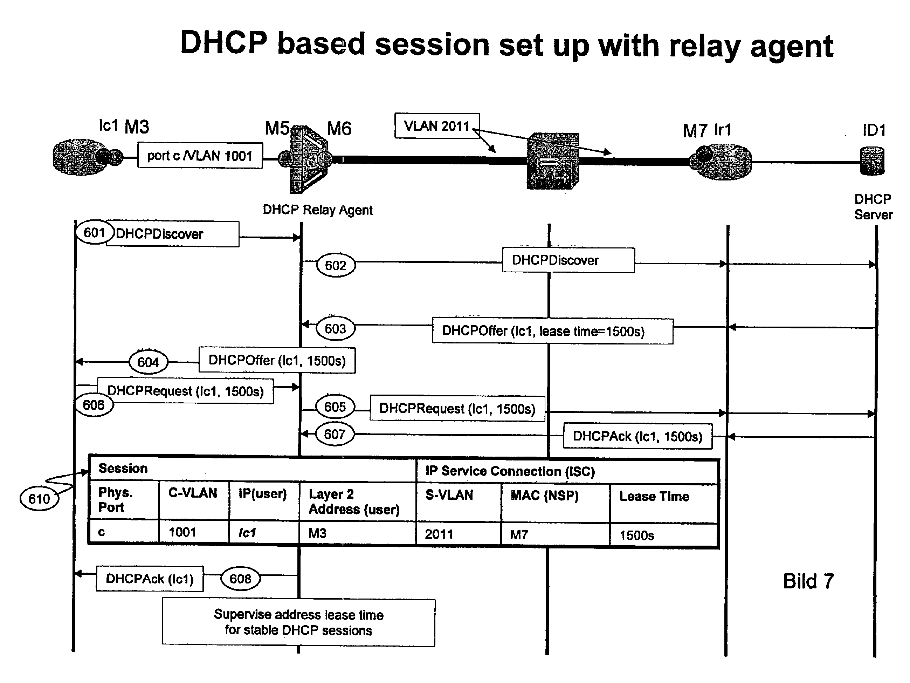

Bild 7 zeigt für den Fall von IPv4 wie DHCP Nachrichten verwendet werden, um eine IP Session aufzubauen. Hierbei wird im IP Service Switch ein DHCP Relay Agent eingesetzt, über den sämtliche DHCP Nachrichten zwischen Dienstnutzern und Netz geführt werden. Aus dem Nachrichtenaustausch 601 bis 608 kann der Relay Agent die notwendige Vermittlungsvorschrift entnehmen und damit die Tabelle 610 füllen. Optional kann in die Vermittlungsvorschrift die DHCP Lease Time aufgenommen und vom IP Service Switch überwacht werden. Im Beispiel ist die Lease Time 1500s lang.

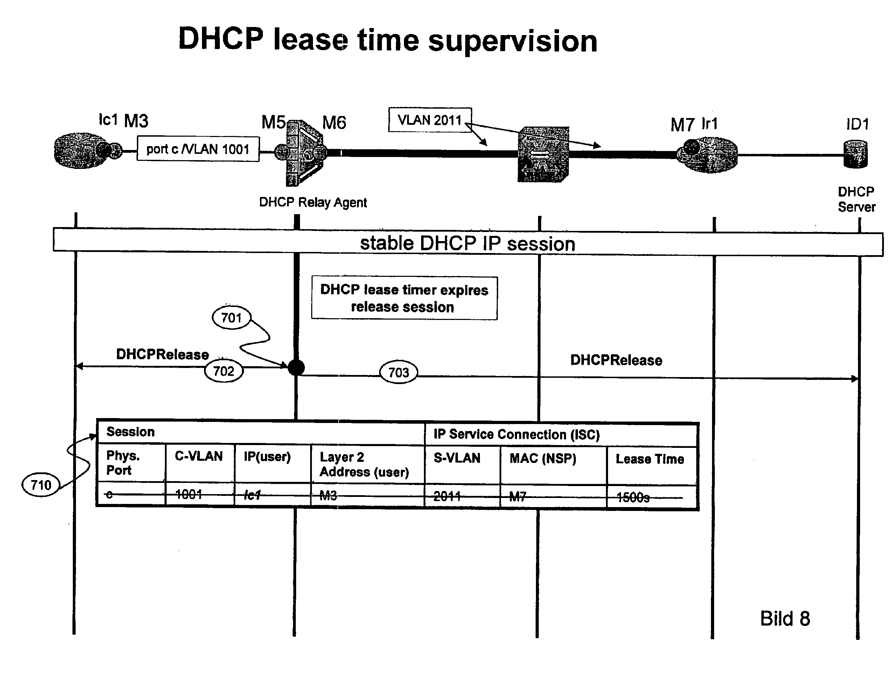

Bild 8 zeigt wie nach Ablauf der Lease Time der IP Service Switch die IP Session auslöst. Hierzu sendet der Relay Agent DHCP Release Nachrichten zum Endgerät und zum netzseitigen DHCP Server. Zusätzlich werden in der Tabelle der Vermittlungsvorschriften (710) die Daten der IP Session gelöscht. Danach werden keine IP Pakete mit der Ursprungsadresse Ic1 von diesem Session Port in das Netz weitergeleitet.

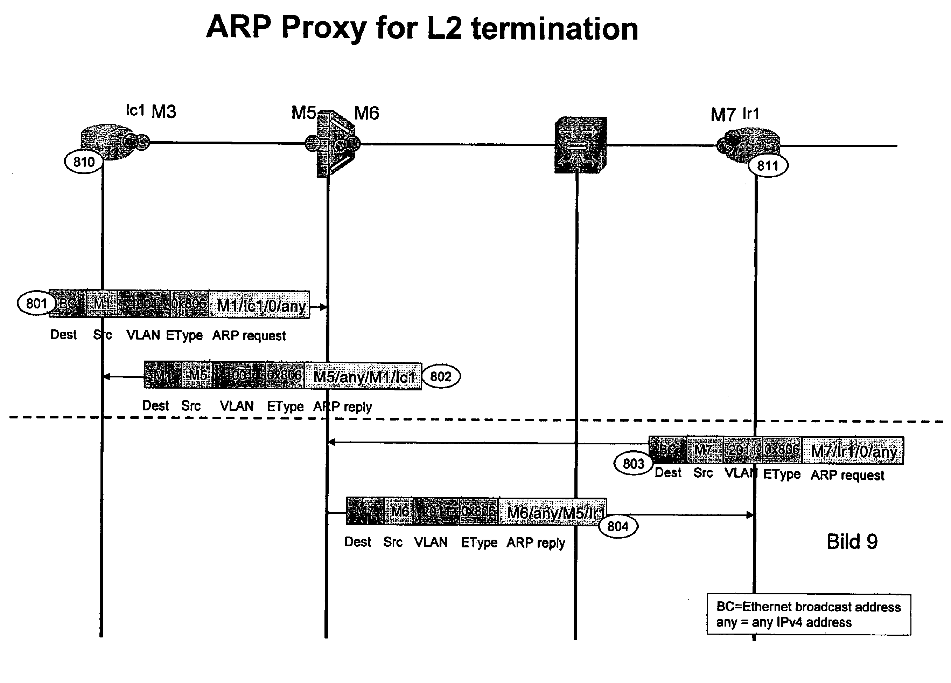

Bild 9 zeigt wie im Falle von IPv4 ARP Requests des Nutzers 801 bzw. ARP requests des IP Edge Routers 803 vom IP Service Switch beantwortet werden. In jedem der beiden Fälle und für jede der IP Adressen "any" beantwortet der IP Service Switch ARP Requests mit seiner jeweiligen MAC Adresse. Dies ist M5 im Falle des ARP Reply 802 und M6 im Falle des ARP Reply 804. Diese Antworten stellen sicher, dass sowohl das nutzerseitige Geräte 810 als auch der netzseitige IP Router 811 die MAC Adressen des IP Service Switchs verwenden um die IP Pakete zu übermitteln.

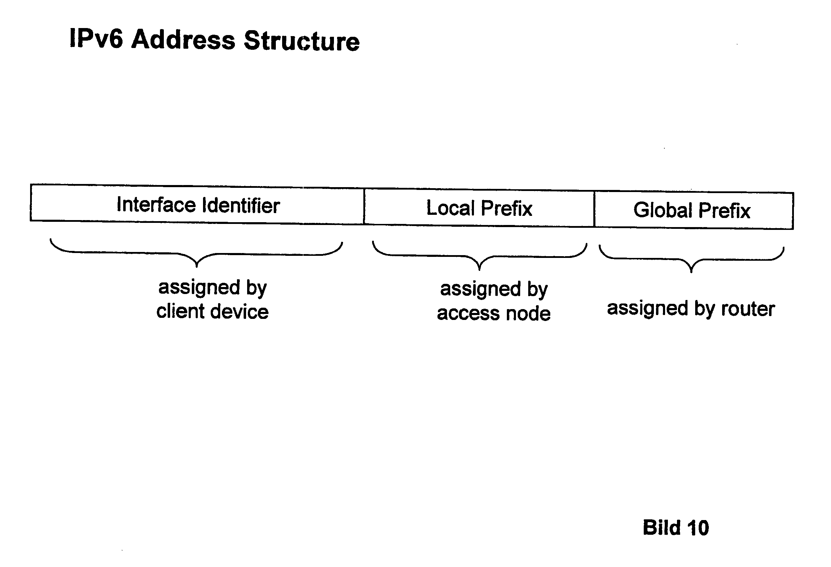

Bild 10 zeigt die Struktur der IP Adresse für den Sonderfall IPv6. Hier entsteht das Problem, dass die IP Adresse einen Interface Identifier enthält, der vom Client selbst vergeben wird. Der Interface Identifier kann der Schicht 2 Adresse des Clients entsprechen, er kann aber auch zufällig gewählt werden. Somit entsteht das Problem, das auch bei identischen Interface Ids mehrerer Clients eine eindeutige IP Adresse generiert werden muss. Erfindungsgemäß wird dieses Problem so gelöst, dass der IP Service Switch selbst einen lokalen IP Prefix vergeben kann, der im Einzelfall so gewählt ist, dass eine eindeutige IP Adresse entsteht. Jedem IP Service Switch in einem Subnetz müssen also mehrere lokale Prefixe zugewiesen werden, so dass die Kombination von lokalem und globalem Prefix immer eine eindeutige IP Adresse ergibt, unabhängig vom jeweiligen Interface Identifier. Der Client erhält diese Zuordnung entweder über DHCP oder mittels stateless address autoconfiguration (router discovery).

### Vorteile, die sich aus der Lösung der Aufgabenstellung der Erfindung ergeben

a) Sessionbasiertes IP Vermittlung statt IP-Routing im IP Service Switch. Damit muss der Zugangsnetzbetreiber nicht gleichzeitig IP Netzbetreiber sein, d.h. er benötigt keine eigenen IP Adressen für die Teilnehmer. Gleichzeitig können mehrere IP-Netzbetreiber im gleichen Zugangsnetz unterstützt werden. Ein Teilnehmer kann auch simultan mehrere IP- Session zu verschiedenen IP Netzbetreibern halten. Außerdem wird verhindert, dass die Zahl der IP-Knoten um ein bis zwei Größenordnungen im Vergleich zu heute üblichen IP-Netzen anwächst.
b) Die Erfindung ermöglicht eine Netzarchitektur für IP/Ethernet-basierte Zugangsnetze, welche die Funktion des BAS in das Zugangsnetz verlagert und so modifiziert, dass die Zugangskontrolle mit IP/Ethernet-basierten Methoden erfolgen kann. Einerseits entfällt dadurch die Notwendigkeit für einen separaten BAS, was zu signifikanten Kosteneinsparungen führt. Zum anderen verschiebt sich die Zugangskontrolle näher zum Teilnehmer, wodurch sich eine hohe Netzsicherheit ergibt und eine bessere QoS Unterstützung ermöglicht wird.

### Vorteil, der sich aus der Lösung der Zusatz-Aufgabenstellung der Erfindung ergibt

Terminierung von Schicht 2. Insbesondere bei Einsatz von Ethernet als Schicht 2 sind eine Vielzahl möglicher Angriffe auf Netzfunktion und -integrität bekannt. Durch Terminierung von Schicht 2 im IP Service Switch werden diese Angriffe für die hinter den IP Service Switch liegende Netzknoten weitgehend entschärft.

## Patentansprüche

1. Verfahren zur Vermittlung von IP-Paketen zwischen Kundennetzen (110, 120, 130) und IP-Provider-Netzen (150, 170) über ein Zugangsnetz (160), demgemäß
a) die Kundennetze an Ports von Zugangsknoten (IP service switch) des Zugangsnetzes angeschlossen sind,
b) IP Sessions zwischen den Kundennetzen und den IP-Provider-Netzen durch die Zuordnung von IP Adressen zu den den Kundennetzen an den Zugangsports der Zugangsknoten zugeordneten Schicht 2 Adressen definiert sind,
c) IP Dienstverbindungen zwischen den Zugangsknoten des Zugangsnetzes und den IP-Provider-Netzen durch den IP-Provider-Netzen zugeordnete Schicht 2 Adressen definiert sind,
d) eine aktive IP Session mindestens einer IP Dienstverbindung zugeordnet wird
e) mehrere aktive IP Sessions derselben IP Dienstverbindung zugeordnet werden können,
**dadurch gekennzeichnet,**
**dass** bei der Vermittlung aufgrund der genannten Zuordnung zwischen IP Sessions und IP Dienstverbindungen
- Schicht 2 Adresse(n) und/oder Attribute aus Frames, in denen IP Pakete einer IP Session zu den Zugangsknoten übermittelt werden, ganz oder teilweise durch die der jeweiligen IP Dienstverbindung zugeordneten Schicht 2 Adresse(n) und/oder Attribute ersetzt werden, und/oder
- Schicht 2 Adresse(n) und/oder Attribute aus Frames, in denen IP Pakete von IP Dienstverbindungen zu den Zugangsknoten übermittelt werden, ganz oder teilweise durch die der jeweiligen IP Session zugeordneten Schicht 2 Adresse(n) und/oder Attribute ersetzt werden.

2. Verfahren nach Anspruch 1,
**dadurch gekennzeichnet,**
**dass** die Zuordnung einer IP Session zu einer IP Dienstverbindung während des IP-Session-Aufbaus durch den Zugangsknoten mit Hilfe von Session-Aufbaunachrichten erlernt wird.

3. Verfahren nach Anspruch 1,
**dadurch gekennzeichnet,**
**dass** die Zuordnung einer IP Session zu einer IP Dienstverbindung nach dem Sessionaufbau durch Session-Modifikationsnachrichten geändert wird.

4. verfahren nach Anspruch 1,
**dadurch gekennzeichnet,**
**dass** ein IP-Paket durch ein IPv4 Paket oder ein IPv6 Paket gegeben ist.

5. Verfahren nach Anspruch 1,
**dadurch gekennzeichnet,**
**dass** eine IP Session zusätzlich mithilfe eines oder mehreren physikalischen Ports des Zugangsknotens registriert wird.

6. Verfahren nach Anspruch 1,
**dadurch gekennzeichnet,**
**dass** unabhängig von der Ziel-IP Adresse in ankommenden IP Paketen einer IP Session, alle IP Pakete einer IP Session auf dieselbe IP Dienstverbindung oder dieselben IP Dienstverbindungen vermittelt werden.

7. Verfahren nach Anspruch 1,
**dadurch gekennzeichnet,**
**dass** eine Schicht 2 Adresse durch eine Ethernet MAC Adresse festgelegt wird.

8. Verfahren nach Anspruch 1,
**dadurch gekennzeichnet,**
**dass** eine Schicht 2 Adresse durch ein VPI/VCI Paar einer ATM Strecke festgelegt wird.

9. verfahren nach Anspruch 1,
**dadurch gekennzeichnet,**
**dass** eine Schicht 2 Adresse durch ein oder mehrere MPLS Label einer MPLS Strecke festgelegt wird.

10. Verfahren nach Anspruch 1,
**dadurch gekennzeichnet,**
**dass** eine Schicht 2 Adresse durch einen DLCI einer Frame Relay Strecke festgelegt wird.

11. Verfahren nach Anspruch 1,
**dadurch gekennzeichnet,**
**dass** eine IP Session zusätzlich durch weitere IP Adressen (z.B. ein IP Subnetz) und/oder eines oder mehrere der folgende Attribute **gekennzeichnet** wird
a) ein Ethernet VLAN tag
b) ein Ethernet .1p code point
c) ein DSCP code point des zu vermittelnden IP Paketes
d) eine Schicht 2 Adresse des Zugangsknotens

12. Verfahren nach Anspruch 1,
**dadurch gekennzeichnet,**
**dass** eine IP Dienstverbindung zusätzlich durch eines oder mehrere der folgende Attribute festgelegt wird
a) ein Ethernet VLAN tag
b) einen Ethernet .1p code point
c) ein DSCP code point
d) eine Schicht 2 Adresse des Zugangsknotens.

13. Verfahren nach Anspruch 1,
**dadurch gekennzeichnet,**
**dass** IP Sessions durch IPv6 Router Discovery / Stateless Address Autoconfiguration Nachrichten aufgebaut werden.

14. Verfahren nach Anspruch 1,
**dadurch gekennzeichnet,**
**dass** IP Sessions durch DHCP Nachrichten aufgebaut werden.

15. Verfahren nach Anspruch 1 und 2,
**dadurch gekennzeichnet,**
**dass** session-Modifikationsnachrichten durch DHCP_Request-Nachrichten gegeben sind.

16. Verfahren nach Anspruch 1,
**dadurch gekennzeichnet,**
**dass** beim IP Session-Aufbau zusätzlich 802.1x Nachrichten verwendet werden.

17. Verfahren nach einem der Ansprüche 1 bis 16,
**dadurch gekennzeichnet,**
**dass** der Zugangsknoten für eine IP Session basierend auf Informationen der Session-Aufbau- oder der Session-Modifikationsnachrichten ein "Policy Enforcement" durchführt.

18. Verfahren nach Anspruch 14,
**dadurch gekennzeichnet,**
**dass** eine DHCP lease time durch den Zugangsknoten für die IP Sessions überwacht wird und nach Ablauf der Lease Time die IP Session abgebaut wird.

19. Verfahren nach einem der Ansprüche 1 bis 18,
**dadurch gekennzeichnet,**
**dass** ein IPv6 Neighbor Discovery Proxy im Zugangsknoten realisiert wird, durch den kunden- und netzseitige Neighbor Discovery Requests mit einer Schicht 2 Adresse des zugangsknotens beantwortet werden.

20. Verfahren nach einem der Ansprüche 1 bis 18,
**dadurch gekennzeichnet,**
**dass** ein ARP-Proxy im Zugangsknoten realisiert wird, durch den kunden- und netzseitige ARP-Requests mit einer Schicht 2 Adresse des zugangsknotens beantwortet werden.

21. Verfahren nach Anspruch 1,
**dadurch gekennzeichnet,**
**dass** einer IP Session außer dem globale auch ein lokaler IP Address Prefix zugeordnet wird.

22. Zugangsnoten (140) eines Zugangsnetzes (160), so ausgestaltet dass
a) an ihm Kundennetze (110, 120, 130) über Ports
des Zugangsnetzes angeschlossen sind,
und dass der knoten
b) IP Sessions zwischen den Kundennetzen und IP-Provider-Netzen (150, 170) durch die Zuordnung von IP Adressen zu den den Kundennetzen an den Zugangsports des Zugangsknoten zugeordneten Schicht 2 Adressen registriert,
c) IP Dienstverbindungen zwischen den Zugangsnetzen und den IP-Provider-Netzen durch den IP-Provider-Netzen zugeordnete Schicht 2 Adressen festlegt,
d) eine aktive IP Session mindestens einer IP Dienstverbindung zuordnet
e) mehrere aktive IP Sessions derselben IP Dienstverbindung zuordnen kann,
**dadurch gekennzeichnet,**
**dass** der zugangsknoten (140) aufgrund der genannten Zuordnung zwischen IP Sessions und IP Dienstverbindungen
- Schicht 2 Adresse(n) und/oder Attribute aus Frames, in denen IP Pakete einer IP Session zu dem Zugangsknoten übermittelt werden, ganz oder teilweise durch die der jeweiligen IP Dienstverbindung zugeordnete(n) Schicht 2 Adresse(n) und/oder Attribute ersetzt, und/oder
- Schicht 2 Adresse(n) und/oder Attribute aus Frames, in denen IP Pakete von IP Dienstverbindungen zu dem Zugangsknoten übermittelt werden, ganz oder teilweise durch die der jeweiligen IP Session zugeordnete(n) Schicht 2 Adresse(n) und/oder Attribute ersetzt.

23. Zugangsknoten nach Anspruch 22,
**dadurch gekennzeichnet,**
**dass** er die Zuordnung einer IP Session zu einer IP Dienstverbindung während des IP-Session-Aufbaus mit Hilfe von Session-Aufbaunachrichten erlernt.

24. Zugangsknoten nach Anspruch 22,
**dadurch gekennzeichnet,**
**dass** er die Zuordnung einer IP Session zu einer IP-Dienst-verbindung nach dem Sessionaufbau durch Session-Modifikationsnachrichten ändert.

25. Zugangsknoten nach Anspruch 22,
**dadurch gekennzeichnet,**
**dass** er eine IP Session zusätzlich mithilfe eines oder mehreren physikalischen Ports registriert.

## Claims

1. Method for switching IP packets between customer networks (110, 120, 130) and IP provider networks (150, 170) via an access network (160), according to which
a) the customer networks are connected to ports of access nodes (IP service switch) of the access network,
b) IP sessions between the customer networks and the IP provider networks are defined by the allocation of IP addresses to the layer-2 addresses associated with the customer networks on the access ports of the access nodes,
c) IP service connections between the access nodes of the access network and the IP provider networks are defined by layer-2 addresses associated with the IP provider networks,
d) an active IP session is allocated to at least one IP service connection,
e) a plurality of active IP sessions can be allocated to the same IP service connection,
**characterized**
**in that** said association between IP sessions and IP service connections means that the switching involves
- layer-2 address(es) and/or attributes from frames in which IP packets of an IP session are transmitted to the access nodes being replaced entirely or in part by the layer-2 address(es) and/or attributes associated with the respective IP service connection, and/or
- layer-2 address(es) and/or attributes from frames in which IP packets of IP service connections are transmitted to the access nodes being replaced entirely or in part by the layer-2 address(es) and/or attributes associated with the respective IP session.

2. Method according to Claim 1,
**characterized**
**in that** the association between an IP session and an IP service connection is learned during the IP session setup by the access node using session setup messages.

3. Method according to Claim 1,
**characterized**
**in that** the association between an IP session and an IP service connection is changed following the session setup by session modification messages.

4. Method according to Claim 1,
**characterized**
**in that** an IP packet means an IPv4 packet or an IPv6 packet.

5. Method according to Claim 1,
**characterized**
**in that** an IP session is additionally registered using one or more physical ports of the access node.

6. Method according to Claim 1,
**characterized**
**in that** regardless of the destination IP address in incoming IP packets from an IP session, all the IP packets from an IP session are switched to the same IP service connection or the same IP service connections.

7. Method according to Claim 1,
**characterized**
**in that** a layer-2 address is constituted by an Ethernet MAC address.

8. Method according to Claim 1,
**characterized**
**in that** a layer-2 address is constituted by a VPI/VCI pair of an ATM section.

9. Method according to Claim 1,
**characterized**
**in that** a layer-2 address is constituted by one or more MPLS labels of an MPLS section.

10. Method according to Claim 1,
**characterized**
**in that** a layer-2 address is constituted by a DLCI of a frame relay section.

11. Method according to Claim 1,
**characterized**
**in that** an IP session is additionally **characterized by** further IP addresses (e.g. an IP subnetwork) and/or one or more of the following attributes:
a) an Ethernet VLAN tag
b) an Ethernet .1p code point
c) a DSCP code point of the IP packet which is to be switched
d) a layer-2 address of the access node.

12. Method according to Claim 1,
**characterized**
**in that** an IP service connection is further constituted by one or more of the following attributes:
a) an Ethernet VLAN tag
b) an Ethernet .1p code point
c) a DSCP code point
d) a layer-2 address of the access node.

13. Method according to Claim 1,
**characterized**
**in that** IP sessions are set up by IPv6 router discovery/stateless address autoconfiguration messages.

14. Method according to Claim 1,
**characterized**
**in that** IP sessions are set up by DHCP messages.

15. Method according to Claims 1 and 2,
**characterized**
**in that** session modification messages are constituted as DHCP_request messages.

16. Method according to Claim 1,
**characterized**
**in that** the IP session setup additionally involves the use of 802.1x messages.

17. Method according to one of Claims 1 to 16,
**characterized**
**in that** the access node for an IP session performs "policy enforcement" based on information from the session-setup or session-modification messages.

18. Method according to Claim 14,
**characterized**
**in that** a DHCP lease time is monitored by the access node for the IP sessions, and following expiry of the lease time the IP session is released.

19. Method according to one of Claims 1 to 18,
**characterized**
**in that** an IPv6 neighbour discovery proxy is implemented in the access node, which responds to customer and network neighbour discovery requests with a layer-2 address of the access node.

20. Method according to one of Claims 1 to 18,
**characterized**
**in that** an ARP proxy is implemented in the access node, which responds to customer and network ARP requests with a layer-2 address of the access node.

21. Method according to Claim 1,
**characterized**
**in that** a local IP address prefix is also allocated to an IP session besides the global IP address prefix.

22. Access node (140) in an access network (160), designed such that
a) it has customer networks (110, 120, 130) connected to it via ports in the access network,
and that the node
b) registers IP sessions between the customer networks and IP provider networks (150, 170) by allocating IP addresses to the layer-2 addresses associated with the customer networks on the access ports of the access node,
c) constitutes IP service connections between the access networks and the IP provider networks using layer-2 addresses associated with the IP provider networks,
d) allocates an active IP session to at least one IP service connection,
e) can allocate a plurality of active IP sessions to the same IP service connection,
**characterized**
**in that**, based on said association between IP sessions and IP service connections, the access node (140)
- replaces layer-2 address(es) and/or attributes from frames in which IP packets of an IP session are transmitted to the access node entirely or in part by the layer-2 address(es) and/or attributes associated with the respective IP service connection, and/or
- replaces layer-2 address(es) and/or attributes from frames in which IP packets of IP service connections are transmitted to the access node entirely or in part by the layer-2 address(es) and/or attributes associated with the respective IP session.

23. Access node according to Claim 22,
**characterized**
**in that** it learns the association between an IP session and an IP service connection during the IP session setup using session setup messages.

24. Access node according to Claim 22,
**characterized**
**in that** it changes the association between an IP session and an IP service connection following the session setup using session modification messages.

25. Access node according to Claim 22,
**characterized**
**in that** it additionally registers an IP session using one or more physical ports.

## Revendications

1. Procédé de commutation de paquets IP entre des réseaux de clients (100, 120, 130) et des réseaux de fournisseurs IP (150, 170) via un réseau d'accès (160), dans lequel
a) les réseaux de clients sont raccordés à des ports de noeuds d'accès (IP service switch) du réseau d'accès;
b) des sessions IP entre les réseaux de clients et les réseaux de fournisseurs IP sont définies par l'affectation d'adresses IP aux adresses de couche 2 affectées aux réseaux de clients au niveau des ports d'accès des noeuds d'accès ;
c) des liaisons de services IP entre les noeuds d'accès du réseau d'accès et les réseaux de fournisseurs IP sont définies par des adresses de couche 2 affectées aux réseaux de fournisseurs IP ;
d) une session IP active est associée à au moins une liaison de service IP ;
e) plusieurs sessions IP actives peuvent être associées à la même liaison de service IP,
**caractérisé en ce que**, lors de la commutation sur la base de ladite association entre sessions IP et liaisons de services IP,
- une ou des adresses de couche 2 et/ou des attributs provenant de trames dans lesquelles des paquets IP d'une session IP sont transmis aux noeuds d'accès, sont remplacés, en tout ou partie, par la ou les adresses de couche 2 et/ou attributs affectés à la liaison de service IP respective et/ou
- une ou des adresses de couche 2 et/ou des attributs provenant de trames dans lesquelles des paquets IP sont transmis par des liaisons de services IP vers les noeuds de réseau, sont remplacés, en tout ou partie, par la ou les adresses de couche 2 et/ou attributs affectés à la session IP respective.

2. Procédé selon la revendication 1, **caractérisé en ce que** l'apprentissage de l'association d'une session IP à une liaison de service IP s'effectue pendant l'établissement de la session IP par le noeud d'accès à l'aide de messages d'établissement de session.

3. Procédé selon la revendication 1, **caractérisé en ce que** l'association d'une session IP à une liaison de service IP est modifiée après l'établissement de la session par des messages de modification de session.

4. Procédé selon la revendication 1, **caractérisé en ce qu'**un paquet IP est donné par un paquet IPv4 ou un paquet IPv6.

5. Procédé selon la revendication 1, **caractérisé en ce qu'**une session IP est enregistrée additionnellement à l'aide d'un ou de plusieurs ports physiques du noeud d'accès.

6. Procédé selon la revendication 1, **caractérisé en ce que**, indépendamment de l'adresse IP de destination dans des paquets IP entrants d'une session IP, tous les paquets IP d'une session IP sont commutés sur la même liaison de service IP ou les mêmes liaisons de services IP.

7. Procédé selon la revendication 1, **caractérisé en ce qu'**une adresse de couche 2 est déterminée par une adresse MAC Ethernet.

8. Procédé selon la revendication 1, **caractérisé en ce qu'**une adresse de couche 2 est déterminée par un couple VPI/VCI d'un trajet ATM.

9. Procédé selon la revendication 1, **caractérisé en ce qu'**une adresse de couche 2 est déterminée par une ou plusieurs étiquettes MPLS d'un trajet MPLS.

10. Procédé selon la revendication 1, **caractérisé en ce qu'**une adresse de couche 2 est déterminée par un DLCI d'un trajet de relais de trames (frame relay).

11. Procédé selon la revendication 1, **caractérisé en ce qu'**une session IP est additionnellement **caractérisée par** d'autres adresses IP (par exemple, un sous-réseau IP) et/ou un ou plusieurs des attributs suivants :
a) une étiquette de VLAN Ehernet ;
b) un point de code .1p Ethernet ;
c) un point de code DSCP du paquet IP à commuter ;
d) une adresse de couche 2 du noeud d'accès.

12. Procédé selon la revendication 1, **caractérisé en ce qu'**une liaison de service IP est additionnellement déterminée par un ou plusieurs des attributs suivants :
a) une étiquette de VLAN Ethernet ;
b) un point de code .1p Ethernet ;
c) un point de code DSCP ;
d) une adresse de couche 2 du noeud d'accès.

13. Procédé selon la revendication 1, **caractérisé en ce que** des sessions IP sont établies par des messages IPv6 Router Discovery / Stateless Address Autoconfiguration.

14. Procédé selon la revendication 1, **caractérisé en ce que** des sessions IP sont établies par des messages DHCP.

15. Procédé selon la revendication 1 et 2, **caractérisé en ce que** des messages de modification de session sont donnés par des messages DHCP_Request.

16. Procédé selon la revendication 1, **caractérisé en ce que**, lors de l'établissement d'une session IP, des messages 802.1x sont utilisés additionnellement.

17. Procédé selon l'une des revendications 1 à 16, **caractérisé en ce que** le noeud d'accès pour une session IP exécute un « policy enforcement » sur la base d'informations des messages d'établissement de sessions ou de modification de sessions.

18. Procédé selon la revendication 14, **caractérisé en ce qu'**un DHCP lease time est surveillé par le noeud d'accès pour les sessions IP et la session IP est fermée après l'expiration du lease time.

19. Procédé selon l'une des revendications 1 à 18, **caractérisé en ce qu'**est réalisé, dans le noeud d'accès, un IPv6 Neighbor Discovery Proxy par lequel il est répondu à des requêtes Neighbor Discovery Requests côté client et réseau avec une adresse de couche 2 du noeud d'accès.

20. Procédé selon l'une des revendications 1 à 18, **caractérisé en ce qu'**est réalisé, dans le noeud d'accès, un ARP Proxy par lequel il est répondu à des requêtes ARP Requests côté client et réseau avec une adresse de couche 2 du noeud d'accès.

21. Procédé selon la revendication 1, **caractérisé en ce qu'**est également affecté à une session IP, outre le préfixe global, un préfixe local d'adresse IP.

22. Noeud d'accès (140) d'un réseau d'accès (160), réalisé de manière telle que :
a) des réseaux de clients (110, 120, 130) lui sont raccordés via des ports du réseau d'accès,
et que le noeud
b) enregistre des sessions IP entre les réseaux de clients et les réseaux de fournisseurs IP (150, 170) par l'affectation d'adresses IP aux adresses de couche 2 affectées aux réseaux de clients au niveau des ports d'accès du noeud d'accès ;
c) définit des liaisons de services IP entre les réseau d'accès et les réseaux de fournisseurs IP par des adresses de couche 2 affectées aux réseaux de fournisseurs IP ;
d) associe une session IP active à au moins une liaison de service IP ;
e) peut associer plusieurs sessions IP actives à la même liaison de service IP,
**caractérisé en ce que** le noeud d'accès (140), sur la base de ladite association entre sessions IP et liaisons de services IP,
- remplace une ou des adresses de couche 2 et/ou des attributs provenant de trames dans lesquelles des paquets IP d'une session IP sont transmis au noeud d'accès, en tout ou partie, par la ou les adresses de couche 2 et/ou attributs affectés à la liaison de service IP respective et/ou
- remplace une ou des adresses de couche 2 et/ou des attributs provenant de trames dans lesquelles des paquets IP sont transmis par des liaisons de services IP vers le noeud de réseau, en tout ou partie, par la ou les adresses de couche 2 et/ou attributs affectés à la session IP respective.

23. Noeud d'accès selon la revendication 22, **caractérisé en ce qu'**il apprend l'association d'une session IP à une liaison de service IP pendant l'établissement de la session IP à l'aide de messages d'établissement de session.

24. Noeud d'accès selon la revendication 22, **caractérisé en ce qu'**il modifie l'association d'une session IP à une liaison de service IP après l'établissement de la session par des messages de modification de session.

25. Noeud d'accès selon la revendication 22, **caractérisé en ce qu'**il enregistre une session IP additionnellement à l'aide d'un ou de plusieurs ports physiques.
